# EUROPEAN PATENT SPECIFICATION

(11) **EP 0 310 928 B1**
(45) Date of publication and mention of the grant of the patent: **22.11.1995**
(21) Application number: 88115982.6
(22) Date of filing: 28.09.1988
(51) Int. Cl.: H04N 3/08, G02B 26/10

(54) **Real time three dimensional display**
Dreidimensionale Echtzeitdarstellung
Affichage tridimensionnel en temps réel

(30) Priority: 07.10.1987 US 105924
(43) Date of publication of application: 12.04.1989
(73) Proprietor: TEXAS INSTRUMENTS INCORPORATED, Dallas Texas 75265 (US)
(72) Inventor: Garcia, Felix, Jr., Round Rock Texas 78664 (US); Williams, Rodney D., Plano Texas 75075 (US)
(74) Representative: Leiser, Gottfried, Dipl.-Ing.

(56) References cited:
- US-A- 3 970 361
- 1988 SID INTERNATIONAL SYMPOSIUM, DIGEST OF TECHNICAL PAPERS, Anaheim,California, 24th - 26th May 1988, vol. 19, pages 91-94, SID; R.D. WILLIAMS etal.: "A real-time autostereoscopic multiplanar 3D display system"
- PATENT ABSTRACTS OF JAPAN, vol. 5, no. 138 (P-078), 2nd September 1981; & JP-A-56 074 219

## Description

### BACKGROUND OF THE INVENTION

### FIELD OF THE INVENTION

This invention relates to a three-dimensional display system of the type defined in claim 1 and, more specifically, to a system capable of displaying images on a screen in three dimensions wherein one or more such images can be projected in two dimensions from either the same side of the screen or from opposite sides thereof.

### BRIEF DESCRIPTION OF THE PRIOR ART

It has been known in the prior art to modulate or scan a beam, such as a laser beam and then to project the scanned beam onto a screen. Examples of such systems are set forth in Baker Patents US-A-3,471,641 and US-A-3,549,800.

It has also been long desired to provide a three-dimensional display. Prior art systems for creating such a display have involved moving a flat plate mirror or flexing a plastic mirror to reflect a CRT image to create a volume display. Similar techniques have employed a Mylar membrane stretched over a metal ring and silvered on the front surface, such mirror being vibrated to reflect the information displayed on the CRT in synchronism with the mirror motion. Such techniques and techniques for converting a cathode ray tube two-dimensional display into a three dimensional image are discussed in the article "Terminal Puts 3-Dimensional Graphics on Solid Ground", by Harry S. Stover, Electronics, July 28, 1961.

Prior art three dimensional display techniques were limited because of their use with CRT screens in that the produced image may be viewed only from selected angles. Moreover, such prior art systems have generally not been able to produce real time images and have been limited in the possible vibration frequencies of the screens. Moreover, the use of vibrating mirrors has created difficulties due to the relatively large mass of the mirrors which prevent substantial deflections. For example, such prior art systems have generally been capable of providing a mirror displacement of about 0.4 millimeters.

A need thus arose for a simple and economical three dimensional display system that could produce substantial displacement at a variety of frequencies in order to provide three dimensional images which can be view from all angles. A system which solved this problem is disclosed in Garcia Patent US-A-4,130,832 wherein the three dimensional display includes a laser which directs a beam of light toward a mirror, the mirror being moved in an X-Y plane by piezoelectric transducers. The reflected light beam is directed to a vibrating screen which is moved by a piezoelectric transducer to form a three dimensional image. This system, while providing the desired result, is limited as to the size of the image displayed since the screen and image size are determined by the size of the piezoelectric transducer. Also, this system is affected by G forces, thereby presenting problems where such forces exist, such as in aircraft. The above noted prior art is incorporated herein by reference. In addition, Patents US-A-1,794,103, US-A-3,682,553 and US-A-3,970,361 set forth typical prior art displays of the above noted type.

A three-dimensional display system is also described in Patent Abstracts of Japan, vol. 5, no. 138 (P-078), 2 September 1981; & JP-A-56 074 219 (VICTOR CO. OF JAPAN LTD.) 19-06-1981. In this system the screen moves toward and away from the light beam and does not rotate. If a screen of this type is used, it is impossible to see or even have a portion of the three-dimensional image behind the screen. Therefore, the three-dimensional image is constantly changing in dimension as the screen moves toward and away from the origin of light since it can not exist between that origin. Also, the ultimate size of the possible three-dimensional image is greatly reduced by a convex or concave lense necessary to generate parallel light beams to be projected on the screen.

### SUMMARY OF THE INVENTION

In accordance with the present invention, the above noted problems of the prior art are minimized and there is provided a three dimensional display system which is not substantially affected by G forces and wherein the size of the displayed image and screen is determined by the size of a disk and motor. The system in accordance with the present invention can be used, for example, in business and industry uses, such as solid animation, radar display, molecular research, resonant frequency and harmonics display, military, computer graphics and the like.

The system in accordance with a first embodiment thereof includes a disk-like screen connected to the end of a motor shaft. The disk is attached to the shaft of a motor at a 45 degree angle, though this angle can be varied to provide a larger or smaller height or z-axis dimension, so that, as the disk rotates, a displacement of any given point thereon along the z axis takes place. The image is formed on the screen by projecting a light beam, such as from a laser, through a modulator and toward a scanner which produces an x-y scan of the beam on a screen, the screen herein being the disk discussed hereinabove and the plane of the scan being positioned to be able to reflect the light beam onto the screen. The disk can be translucent, such as lucite, so that images can be projected thereon onto the front and/or rear surfaces thereof. The modulation or strobing of the scan is then synchronized with the rotating disk by control of the motor speed so that a three dimensional pattern appears on the screen. It can be seen that any point on the x-y scan from the scanner which impinges upon the screen will move along a z-axis direction since the screen or disk at that point produces such z-axis movement. This movement of the displayed image provides the three dimensional effect. The adjustment of the angle between the disk surface and the x-y plane of the scanned x-y image will determine the z dimension or height of the three dimensional image, the disk angle being adjustable on-line, if so desired.

While, in the preferred embodiment, the disk herein is a planar opaque screen for receiving a scanned image thereon on one surface thereof, the screen can take many other forms. For example, the disk can be translucent, such as lucite, and thereby capable of receiving a scanned image thereon on both major surfaces. The lucite disk can be in the form of a pair of angularly truncated cylinders with the same which fit together at the angularly truncated surfaces to form a new cylinder wherein the surfaces at which truncation takes place are translucent. In addition, the screen can take on shapes other than planar, it merely being necessary that at least some portion thereof move in the z direction during rotation thereof while projection of the x-y image thereon takes place to provide the three dimensional image. As a further embodiment, the disk can be placed in a gas filled or evacuated CRT with the image impinging thereon being the scanned beam of the tube. Phosphors can be disposed on the disk which, when excited, will form the three dimensional image. Furthermore, the screen can be planar and disposed normal to the projected x-y image. The three dimensional affect is then provided by moving the entire screen along the z-axis in synchronism with the scanned x-y image to provide the three dimensional affect. A cam driven shaft attached to the screen can provide such screen movement along the z-axis.

### BRIEF DESCRIPTION OF THE DRAWINGS

FIGURE 1 is a schematic diagram of a three dimensional display system utilizing a screen in accordance with the present invention; and
FIGURE 2 is a circuit diagram showing synchronization of the scanner with the rotation of the display screen.

### DESCRIPTION OF THE PREFERRED EMBODIMENTS

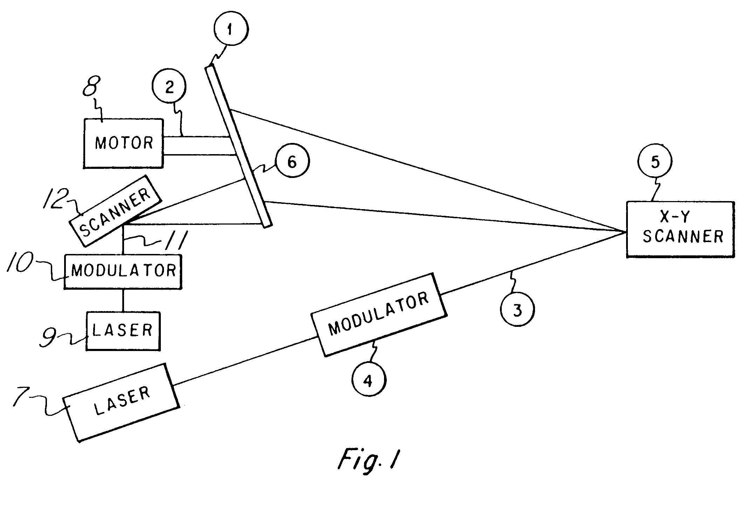

Referring now to FIGURE 1, there is shown a schematic diagram of a system in accordance with the present invention. The system includes a laser 7 which projects a light beam through a modulator 4 onto an x-y scanner 5. The modulator 4 is externally controlled in predetermined manner (not shown) to control the intensity of the laser light beam 3 passing therethrough. It is understood that the light intensity can be controlled so that no light passes through the modulator, when so desired. The x-y scanner, whose scanning rate is externally controllable in standard manner (not shown), scans the light beam 3 from the modulator along an x-y plane and projects this x-y image 6 onto a screen 1 in the form of a disk as will be explained hereinbelow. All of the structure described to this point except for the particular screen and its operation is well known and described in the above noted prior art and elsewhere.

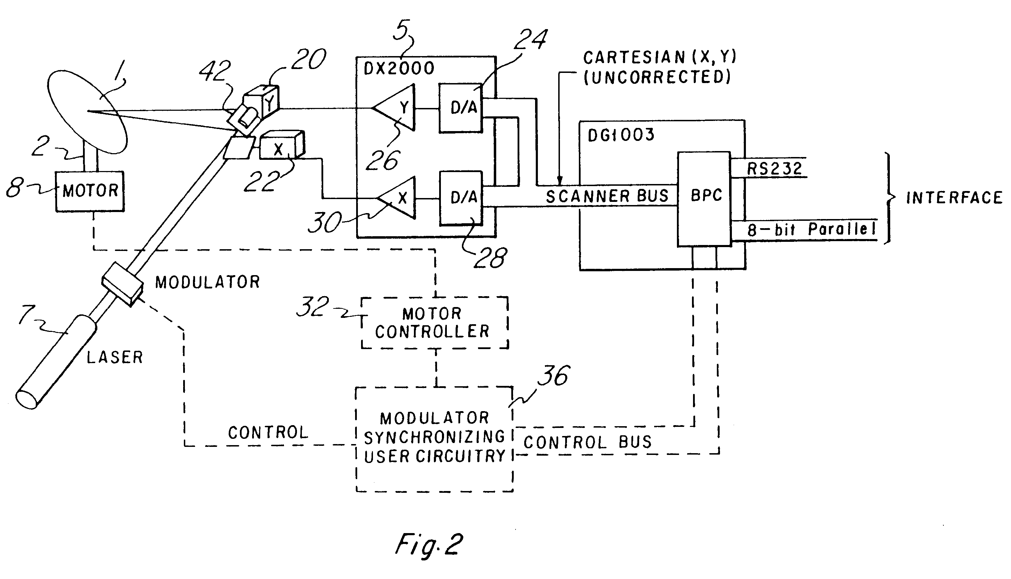

The screen 1 is rotated by a motor 8 via a shaft motor 2, the motor speed being controllable by means of a controller (not shown). The motor speed is preferably synchronized with the scanning rate of the scanner 5. One typical circuit for providing such synchronization is shown in FIGURE 2 so that the same spot on the disk is always present to receive a particular part of the x-y scan projected thereon. The circuit of FIGURE 2 will be explained hereinbelow.

The screen 1 can be a standard type movie screen if it is to be viewed from only one side thereof, as for the system described herein thus far. The screen angle is preferably 45 degrees with respect to the image received from the scanner. However, this angle can be altered about 45 degrees in either direction, the effect of such angle alteration being to vary the height or z-dimension of the displayed image with continued change in such angle. The screen angle is variable on line, if so desired, by a structure (not shown) of known type which rotates the mirror on the shaft 2.

Referring now to FIGURE 2, wherein like reference numerals refer to like structure as in FIGURE 1, the scanner 5 is controlled by signals on the GSI scanner bus which are which are derived from the control bus. The signals on the control bus are provided by the synchronizing user circuitry which can be manually controlled, such as by the control input thereto. The circuitry 36 also controls the motor controller 32 to control the speed of the motor 8. The circuitry 36 can also control the modulator 4 via modulator control circuitry 34. Such circuitry is well known. The scanner 5 includes a digital to analog converter 24 which provides a Y-axis signal via amplifier 26 and a digital to analog converter 28 which provides an X-axis signal via amplifier 30. The signals from amplifiers 26 and 30 control x-axis and y-axis scanning devices 20 and 22 respectively which position a mirror 42 which reflects the modulated light beam from the laser 7.

In operation, a light beam from the laser 7 is modulated by the externally controllable modulator 4 to provide a modulated beam 3 which strikes the x-y scanner 5, the latter having an externally controllable scanning rate as determined by signals on the GSI scanner bus and the control bus of FIGURE 2. The scanner 5 scans the light beam in an x-y plane via the mirror 42 onto the rotating screen 1, the speed of rotation of the screen 1 being synchronized to the scanning rate of the scanner 5 as explained hereinabove. As has been explained hereinabove, any point of light in the x-y plane impinging upon the screen 1 will display a harmonic type motion in the z-plane due to the similar movement of points on the screen. Accordingly, if the scanning rate of the scanner and the rotation rate of the screen are sufficiently high, light impinging upon the screen at any point on the screen will move along the z-axis sufficiently rapidly to appear as a complete line, as is well known. The result is a three dimensional display with height determined by the angle of the screen.

In accordance with a second embodiment of the invention, the system above described is duplicated except that the screen 1 is translucent to permit viewing therethrough. In this manner, images in three dimensions can be provided on both sides of the screen. This is accomplished, with reference to the FIGURE, by providing a second image forming system, identical to that already described, and including a second laser 9, a modulator 10 and a scanner 12 for receiving and scanning the modulated beam 11. The second system operates in the same manner as does the system already described and projects the scanned image in a second x-y plane against the rear surface of the translucent screen 1. This image will move in the z-direction in the same manner as above described except that it will be disposed behind the screen. However, due to the translucent property of the screen 1, both images will be visible in three dimensions from either side of the screen.

While the invention has been described with respect to a rotating screen in the form of a disk disposed at an angle relative to the x-y plane of the scanned beam, it should be understood that other shapes of screen can be substituted for that disclosed.

Though the invention has been described with respect to specific preferred embodiments thereof, many variations and modifications will immediately become apparent to those skilled in the art. It is therefore the intention that the appended claims be interpreted as broadly as possible in view of the prior art to include all such variations and modification.

## Claims

1. A three-dimensional display system comprising:
(a) a light source (7,4) for generating a modulated light beam;
characterized by
(b) rotating light receiving means (1) having a rotation rate synchronized with the modulation of said light beam and having a rotating light receiving surface for receiving and displaying an image impinging thereon; and
(c) a light receiver/transmitter (5) for receiving said modulated light beam (3) and transmitting said light beam to a predetermined location on said rotating light receiving means (1);
(d) said light receiving surface having continuous contiguous portions thereof at progressively different distances from said light receiver/transmitter (5).

2. The three-dimensional display of claim 1 wherein said rotating light receiving means (1) is a planar disk.

3. The three-dimensional display of claims 1 or 2 wherein said rotating light receiving means makes an acute angle with the direction of light transmitted from said receiver/transmitter (5) to said rotating light receiving means (1).

4. The three-dimensional display of claims 1 to 3, wherein said rotating light receiving means (1) is translucent.

5. The three-dimensional display of claims 1 to 4 further including a second modulated light source (9,10) having a modulation rate synchronized to said rotation rate for generating a second modulated light beam (11), said rotating light receiving means having a second light receiving surface for receiving and displaying an image thereon and a second light receiver/transmitter (12) for receiving said second modulated light beam (11) and transmitting said second light beam to a predetermined location on said second light receiving surface.

## Patentansprüche

1. Dreidimensionales Anzeigesystem enthaltend:
(a) eine Lichtquelle (7,4) zum Erzeugen eines modulierten Lichtstrahls;
gekennzeichnet durch
(b) ein rotierendes lichtempfangendes Mittel (1), das eine Drehgeschwindigkeit aufweist, die mit der Modulation des Lichtstrahls synchronisiert ist, und das eine rotierende lichtempfangende Fläche zum Empfangen und Anzeigen eines auf sie einfallenden Bildes aufweist und
(c) eine Licht-Empfangs-/Sendevorrichtung (5) zum Empfangen des modulierten Lichtstrahls (3) und zum Übertragen des Lichtstrahls zu einer vorbestimmten Stelle auf dem rotierenden lichtempfangenden Mittel (1);
(d) wobei die lichtempfangende Fläche stetige zusammenhängende Bereiche bei zunehmend unterschiedlichen Abständen von der Licht-Empfangs-/Sendevorrichtung (5) aufweist.

2. Dreidimensionale Anzeige nach Anspruch 1, worin das rotierende lichtempfangende Mittel (1) eine ebene Scheibe ist.

3. Dreidimensionale Anzeige nach Anspruch 1 oder 2, worin das rotierende lichtempfangende Mittel einen spitzen Winkel mit der Richtung des von der Empfangs-/Sendevorrichtung (5) zum rotierenden lichtempfangenden Mittel (1) übertragenen Lichtes einschließt.

4. Dreidimensionale Anzeige nach den Ansprüchen 1 bis 3, worin das rotierende lichtempfangende Mittel (1) lichtdurchlässig ist.

5. Dreidimensionale Anzeige nach den Ansprüchen 1 bis 4, weiter enthaltend eine zweite modulierte Lichtquelle (9,10), die eine Modulationsgeschwindigkeit aufweist, die mit der Rotationsgeschwindigkeit zum Erzeugen eines zweiten modulierten Lichtstrahls (11) synchronisiert ist, wobei das rotierende lichtempfangende Mittel eine zweite lichtempfangende Fläche zum Empfangen und Anzeigen eines Bildes auf dieser und eine zweite Licht-Empfang-/Sendevorrichtung (12) zum Empfangen des zweiten modulierten Lichtstrahls (11) und zum Senden des zweiten Lichtstrahls zu einer vorbestimmten Stelle auf der zweiten lichtempfangenden Fläche aufweist.

## Revendications

1. Système d'affichage à trois dimensions comprenant :
a) une source de lumière (7,4) pour engendrer un faisceau de lumière modulé;
caractérisé par :
b) des moyens de réception de lumière rotatifs (1) ayant une vitesse de rotation synchronisée avec la modulation dudit faisceau de lumière et ayant une surface de réception de lumière rotative pour recevoir et afficher une image frappant celle-ci ;
c) un émetteur-récepteur de lumière (5) pour recevoir ledit faisceau de lumière modulé (3) et transmettre ledit faisceau de lumière vers un emplacement prédéterminé sur lesdits moyens de réception de lumière rotatifs (1) ; et
d) ladite surface de réception de lumière ayant des portions contigües continues de celle-ci à des distances progressivement différentes à partir dudit émetteur-récepteur de lumière (5).

2. Système selon la revendication 1, dans lequel lesdits moyens de réception de lumière rotatifs (1) sont un disque plan.

3. Système selon la revendication 1 ou 2, dans lequel lesdits moyens de réception de lumière rotatifs forment un angle aigü avec la direction de la lumière transmise à partir dudit émetteur-récepteur (5) vers lesdits moyens de réception de lumière rotatifs (1).

4. Système selon les revendications 1 à 3, dans lequel lesdits moyens de réception de lumière rotatifs (1) sont translucides.

5. Système selon les revendications 1 à 4, comprenant en outre une seconde source de lumière modulée (9,10) ayant un rythme de modulation synchronisé avec ladite vitesse de rotation pour engendrer un second faisceau de lumière modulé (11), lesdits moyens de réception de lumière rotatifs ayant une seconde surface de réception de lumière pour recevoir et afficher une image sur celle-ci et un second émetteur-récepteur de lumière (12) pour recevoir ledit second faisceau de lumière modulé (11) et transmettant ledit second faisceau de lumière vers un emplacement prédéterminé sur ladite seconde surface de réception de lumière.
